# EUROPÄISCHE PATENTSCHRIFT

(11) **EP 3 838 977 B1**
(45) Veröffentlichungstag und Bekanntmachung des Hinweises auf die Patenterteilung: **29.01.2025**
(21) Anmeldenummer: 21152440.0
(22) Anmeldetag: 13.06.2019
(51) Int. Cl.: C08J 11/16, C08J 11/24, C08L 67/02, C08L 75/04

(54) **VERFAHREN ZUM ABBAU VON KUNSTSTOFFEN**
METHOD FOR DEGRADATION OF PLASTICS
PROCÉDÉ DE DÉGRADATION DES MATIÈRES PLASTIQUES

(30) Priorität: 14.06.2018 DE 102018209567
(43) Veröffentlichungstag der Anmeldung: 23.06.2021
(62) Teilanmeldung aus: 19180026.7
(73) Patentinhaber: RAMPF Advanced Polymers GmbH & Co. KG, 72661 Grafenberg (DE)
(72) Erfinder: Kugler, Michael, 73432 Aalen (DE)
(74) Vertreter: Weickmann & Weickmann PartmbB

(56) Entgegenhaltungen:
- WO-A1-2012/091573
- WO-A1-94/10121
- DE-A1- 2 541 100
- ASAHI N ET AL: "Methanolysis investigation of commercially available polyurethane foam", POLYMER DEGRADATION AND STABILITY, BARKING, GB, vol. 86, no. 1, 1 October 2004 (2004-10-01), pages 147 - 151, XP004571975, ISSN: 0141-3910, DOI: 10.1016/J.POLYMDEGRADSTAB.2004.04.002
- LIU LU ET AL: "Degradation process investigation of thermoplastic polyurethane elastomer in supercritical methanol", POLYMER DEGRADATION AND STABILITY, vol. 98, no. 12, 20 September 2013 (2013-09-20), pages 2520 - 2528, XP028794216, ISSN: 0141-3910, DOI: 10.1016/J.POLYMDEGRADSTAB.2013.09.010

## Beschreibung

Die vorliegende Erfindung betrifft ein Verfahren zum katalytischen Abbau von mindestens einem Kunststoff, wobei der mindestens eine Kunststoff Polyurethan ist.

Die erhaltenen Mischungen können als Rohstoffe, z.B. zur Herstellung von Kunststoffen (Kunststoffrecycling), verwendet werden.

Kunststoffe sind allgegenwärtige Werkstoffe und werden unter anderem als Verpackungsmaterialien, Fasern, Isolierungen, Bestandteile von Lacken und Klebstoffen, Schaumstoffe und Konstruktionswerkstoffe, z.B. im Fahrzeugbau, intensiv genutzt. Üblicherweise basieren Kunststoffe größtenteils auf petrochemischen Ausgangsprodukten. Insbesondere in Zeiten zunehmender Ressourcenknappheit, aber auch in Hinblick auf die Problematik steigender Umweltverschmutzung gewinnen Recyclingverfahren vermehrt an Bedeutung.

Recycling von Kunststoffen umfasst den mechanischen, thermischen oder chemischen Abbau von Kunststoffen. Beim mechanischen Abbau wird das Ausgangsmaterial fein gemahlen und im Anschluss mit gängigen Verarbeitungstechniken, wie Extrusion und Spritzguss, in eine neue Form gebracht. Dies ist die gängigste Kunststoffrecyclingvariante, birgt jedoch den Nachteil, dass nur saubere, sortenreine Kunststoffe verarbeitet werden können. Zudem sind die Möglichkeiten der Wiederverwertung an das Ausgangsmaterial gekoppelt und dementsprechend limitiert.

Beim thermischen Abbau, beispielsweise durch Pyrolyse, werden die Kunststoffe bei hohen Temperaturen von etwa 400-900 °C unter Sauerstoffausschluss zersetzt. Durch Gewinnung der niedermolekularen Abbauprodukte des Kunststoffs ist das thermische Recycling vielseitiger als das rein mechanische Verfahren. Zu den mit den hohen Zersetzungstemperaturen verbundenen Nachteilen zählen allerdings der immense energetische Aufwand und das vermehrte Auftreten von Nebenreaktionen, was die Produktreinheit mindert. Auch die Herstellung temperaturempfindlicher Monomere ist im thermischen Verfahren nicht möglich.

Beim chemischen Abbau werden die Kunststoffe durch chemische Reaktion in ihre Monomere zersetzt, die als Edukte in einer Vielzahl an chemischen Verfahren wiederverwendet werden können. Die wirtschaftliche Bedeutung des chemischen Recyclings ist jedoch oftmals durch den Prozessaufwand und die verbundenen Kosten limitiert.

Asani et al. (Polym. Degrad. Stab. 2004, 86, 147) beschreibt den chemischen Abbau von Polyurethanen (PUs) in Methanol. Für eine akzeptable Abbaurate von mehr als 90% muss die Reaktion bei einer Temperatur von mindestens 200 °C und einem Druck von 2-15 MPa durchgeführt werden.

Liu et al. (Polym. Degrad. Stab. 2013, 98, 2520) beschreibt den Mechanismus des chemischen Abbaus von PU in Methanol. Für Reaktionsbedingungen von 220-260°C und 3-13 MPa ist eine Umsetzungsrate von mehr als 90% offenbart.

Nachteile der oben aufgeführten Methanolyse-Verfahren von PU sind die hohen Reaktionstemperaturen und -drücke, die benötigt werden, um akzeptable Umsetzungsraten zu generieren. Mit steigender Temperatur werden ungewollte Nebenreaktionen begünstigt, die die Reinheit und Ausbeute der Zersetzungsprodukte maßgeblich beeinträchtigen und zusätzliche Aufreinigungsschritte nötig werden lassen. Die Wirtschaftlichkeit ist auch ggf. durch Einsatz von teuren Katalysatoren gemindert. Der Einsatz von Katalysatoren erfordert zudem typischerweise einen aufwändigen Abtrennungsschritt.

Liu et al. (J. Polym. Res. 2015, 22, 135) offenbart die katalytische Methanolyse von reiner Polymilchsäure (PLA). Die maximale Umsetzung von PLA ist bei Reaktionstemperaturen von mindestens 130 °C, unter Zusatz von 0,01 mol Eisen(III)-chlorid-Katalysator pro mol PLA für 4 Stunden beschrieben. Eine vollständige Depolymerisierung wird nicht erreicht.

DE 25 41 100 A1 offenbart ein Verfahren zur Zersetzung von Polyurethanen in Gegenwart eines Alkoholat-Katalysators bei Temperaturen von 50 °C bis 180 °C.

Trotz der hohen Relevanz von Verfahren zum Abbau von Kunststoffen mangelt es zum aktuellen Zeitpunkt an Verfahren, die unter wirtschaftlichen Bedingungen die Regeneration diverser Monomere aus mitunter verschmutzten und/oder postconsumer Kunststoffen, wie beispielsweise entsorgten Matratzen, Verpackungen oder Sperrmüll, ermöglichen.

Ziel der vorliegenden Erfindung ist es daher, ein Verfahren bereitzustellen, das mit einfachen Mitteln den Abbau verschiedenartiger Kunststoffe ermöglicht. Dabei ist insbesondere eine Reduktion von Produktionskosten, beispielsweise durch kurze Reaktionszeiten, relativ niedrige Reaktionstemperaturen und -drücke und kostengünstige Edukte (z.B. günstige Katalysatoren), von Interesse. Ferner zielt das erfindungsgemäße Verfahren auf eine vollständige Depolymerisierung ab, wodurch eine verbesserte Weiterverarbeitung der gewonnenen Abbauprodukte ermöglicht und die damit verbundene Wertschöpfung gesteigert wird.

Ein erster Aspekt der vorliegenden Erfindung betrifft ein Verfahren zum Abbau von Kunststoffen umfassend die Schritte:
(i) Bereitstellen von mindestens einem Kunststoff in mindestens einem Lösungsmittel in einem Reaktor;
(ii) Zugeben mindestens eines Katalysators ausgewählt aus Alkoholat;
(iii) Behandeln der in Schritt (ii) erhaltenen Mischung bei erhöhter Temperatur von 30-250°C und/oder erhöhtem Druck von >1-100 bar; und
(iv) ggf. Auftrennen der in Schritt (iii) erhaltenen Mischung,
wobei der mindestens eine Kunststoff Polyurethan ist, und wobei das Lösungsmittel Methanol oder Ethanol, insbesondere Methanol, ist.

Das erfindungsgemäße Verfahren betrifft den Abbau und damit in einem ersten Schritt (i) das Bereitstellen von mindestens einem Kunststoff, wobei der mindestens eine Kunststoff Polyurethan ist.

Dem Fachmann ist bekannt, dass Polyurethane durch Reaktion von Polyisocyanaten mit Polyolen hergestellt werden.

Der Begriff "Polyol" bezieht sich auf Verbindungen mit mindestens 2, das heißt 2, 3, 4 oder mehr, bevorzugt 2 oder 3 Hydroxygruppen. Ein Polyol im Sinne der Erfindung ist bevorzugt ein Polyetherpolyol, insbesondere aliphatisches, z.B. Polyethylenglykol oder Polypropylenglykol, oder aromatisches Polyetherpolyol, Polyesterpolyol, insbesondere aliphatisches oder aromatisches Polyesterpolyol, Diethylenglykol, C₁₋₆-Alkylenglykol, insbesondere Hexandiol, Butandiol, Ethylenglykol und Neopentylglykol, C₁₋₈-Alkylenpolyol, insbesondere Trimethylolpropan und Glycerin, oder eine Mischung davon. Bevorzugte Polyole haben ein gewichtsmittleres Molekulargewicht von 50 - 10.000 g/mol, stärker bevorzugt von 300 - 6.000 g/mol. Bevorzugte Polyole haben eine OH-Zahl von 10 - 900, stärker bevorzugt von 20 - 500.

Ein Polyisocyanat im Sinne der Erfindung kann beispielsweise ein aromatisches oder aliphatisches Polyisocyanat, insbesondere Toluylendiisocyanat (TDI), Diphenylmethan-Diisocyanat (MDI), polymeres MDI, Isophorondiisocyanat (IPDI), Hexamethylendiisocyanat (HMDI), Naphthylen-1,5-diisocyanat (NDI) oder eine Mischung davon umfassen. Bevorzugte Polyisocyanate haben ein gewichtsmittleres Molekulargewicht von 100 - 800 g/mol, stärker bevorzugt von 150 - 600 g/mol. In einer bevorzugten Ausführungsform hat das Polyisocyanat einen NCO-Gehalt von 5 - 70 %, stärker bevorzugt von 15 - 55 %.

Der im Verfahrensschritt (i) bereitgestellte Kunststoff kann als Granulat, Pulver oder Schnittgut bereitgestellt werden.

Im Schritt (i) wird der mindestens eine Kunststoff in mindestens einem Lösungsmittel bereitgestellt, wobei das Lösungmittel Methanol oder Ethanol, bevorzugt Methanol.

Das Gewichtsverhältnis von Kunststoff zu Lösungsmittel in Schritt (i) liegt gegebenenfalls bei 1:1 bis 1:40, bevorzugt bei 1:5 bis 1:20 und stärker bevorzugt 1:5 bis 1:10.

Der mindestens eine Kunststoff in mindestens einem Lösungsmittel wird in einem Reaktor bereitgestellt. Bevorzugt umfasst der Reaktor ein Rührwerk. Das Rührwerk kann beispielsweise axial oder radial fördernd und einstufig oder mehrstufig rühren. Ferner kann der Reaktor gegebenenfalls gasdicht verschlossen werden.

Im Verfahrensschritt (ii) wird zu der Mischung aus Schritt (i) mindestens ein Katalysator ausgewählt aus Alkoholat zugegeben. Der Katalysator ist bevorzugt ein Methanolat, stärker bevorzugt ein Alkalimethanolat, wie z.B. Kaliummethanolat oder Natriummethanolat. Alkoholate sind leicht verfügbar und für das erfindungsgemäße Verfahren bevorzugt, da sie kostengünstig sind und aus dem Reaktionsgemisch, z.B. nach Hydrolyse, leicht abgetrennt werden können.

In einer Ausführungsform liegt das Gewichtsverhältnis von Kunststoff zu Katalysator bevorzugt zwischen 40:1 bis 5:1, stärker bevorzugt zwischen 25:1 bis 5:1. In einer bevorzugten Ausführungsform liegt das Gewichtsverhältnis von Kunststoff zu Katalysator gegebenenfalls zwischen 40:1 bis 10:1 und insbesondere zwischen 30:1 bis 20:1.

Am Ende des erfindungsgemäßen Verfahrens kann der Katalysator durch geeignete, dem Fachmann bekannte Mittel, wie zum Beispiel Filtration wiedergewonnen und erneut im Verfahren eingesetzt werden. Ist die Regeneration des Katalysators nicht gewünscht, kann der Katalysator am Ende des Kunststoffabbaus durch geeignete Mittel wie z.B. Hydrolyse in leicht abtrennbare Verbindungen, z.B. Carbonate und/oder Sulfate, umgewandelt werden. Letztere können beispielsweise durch Filtration leicht abgetrennt werden. Alternativ kann das am Schluss des Verfahrens erhaltene Produkt, umfassend Katalysator und das mindestens eine Lösungsmittel, gegebenenfalls in einem neuen Kunststoffabbauzyklus in Schritt (ii) als Katalysator zugegeben werden.

Es konnte überraschenderweise gezeigt werden, dass der Einsatz von Methanolaten, die Reaktionsbedingungen im Vergleich zu Verfahren aus dem Stand der Technik signifikant verbessert. So kann das erfindungsgemäße Verfahren bei geringeren Reaktionstemperaturen, niedrigeren Reaktionsdrücken und/oder kürzeren Reaktionszeiten im Vergleich zu den etablierten Verfahren durchgeführt werden. Des Weiteren hat sich gezeigt, dass mit dem erfindungsgemäßen Verfahren hohe Ausbeuten und ausgezeichnete Produktqualitäten erzielt werden können. Die hohen Umsatzraten sind insbesondere auch auf das erfindungsgemäße Verhältnis von Polyurethan zu Katalysator zurückzuführen. Ferner haben Alkoholat-Katalysatoren und im Besonderen Methanolat-Katalysatoren den Vorteil, dass sie in einer späteren Applikation der Kunststoffabbauprodukte nicht stören und gegebenenfalls durch eine geeignete Reaktion, wie beispielsweise Hydrolyse, in leicht abtrennbare Verbindungen, wie beispielsweise Carbonate und/oder Sulfate, überführt werden können.

In einer Ausführungsform wird im Verfahrensschritt (iii) die in (ii) erhaltene Mischung bei erhöhter Temperatur behandelt. In einer anderen Ausführungsform wird im Schritt (iii) die in (ii) erhaltene Mischung bei erhöhtem Druck behandelt. In einer bevorzugten Ausführungsform wird die in (ii) erhaltene Mischung bei erhöhter Temperatur und erhöhtem Druck behandelt.

Eine erhöhte Temperatur im Sinne der Erfindung ist von 30-250°C, stärker bevorzugt von 50-200°C, noch stärker bevorzugt von 80-180°C. Ein erhöhter Druck im Sinne der Erfindung ist > 1 bis 100 bar, bevorzugt 1,5-30 bar, stärker bevorzugt 1,5-25 bar, stärker bevorzugt 1,5-20 bar, stärker bevorzugt 2-20 bar, stärker bevorzugt 5-20 bar und am stärksten bevorzugt 15-20 bar betragen. Gegebenenfalls ist der Reaktor im Schritt (iii) gasdicht verschlossen. In einer Ausführungsform kann in dem Reaktor eine sauerstoffreduzierte oder sauerstofffreie Atmosphäre vorliegen. Gegebenenfalls kann eine Inertgasatmosphäre im Reaktor vorliegen. Beispiele für ein geeignetes Inertgas sind Stickstoff und Edelgase, wie zum Beispiel Argon.

Die Behandlungsdauer im Schritt (iii) beträgt bevorzugt 5-800 Minuten und bevorzugt 10-600 Minuten. In einer bevorzugten Ausführungsform beträgt die Behandlungsdauer gegebenenfalls 10-300 Minuten und bevorzugt 10-180 Minuten.

Gemäß der vorliegenden Erfindung, enthält die nach Ende des Schritts (iii) erhaltene Mischung üblicherweise Polyamine, Polyole, Carbamate, Polycarbonsäuren und/oder Polycarbonsäureester.

Im Verfahrensschritt (iv) wird die in Schritt (iii) erhaltene Mischung gegebenenfalls aufgetrennt. Die Auftrennung kann durch Destillation, Filtration, insbesondere Membranfiltration, Fällung, Chromatographie, oder Zentrifugation erfolgen. Gegebenenfalls kann die Auftrennung mehr als einen Auftrennungsschritt und/oder mehr als eine Auftrennungsart umfassen, beispielsweise eine Auftrennung durch Filtration und Destillation, Filtration und Chromatographie, Fällung, Filtration und Destillation oder Fällung, Filtration und Chromatographie.

Ein weiterer Aspekt der vorliegenden Erfindung ist das Bereitstellen einer Mischung, erhältlich nach einem Verfahren gemäß den oben beschriebenen Schritten (i), (ii) und (iii).

Ein weiterer Aspekt der vorliegenden Erfindung ist die Verwendung der erfindungsgemäßen, in Schritt (iii) erhaltenen Mischung zur Herstellung von Kunststoffen. In einer bevorzugten Ausführungsform wird die Mischung zur Herstellung von Polyurethanen verwendet. Die Mischung kann bevorzugt ohne weitere Zwischenschritte z.B. als Monomer zur Herstellung von Kunststoffen verwendet werden. In einer anderen Ausführungsform wird die Mischung nach mindestens einem Auftrennungsschritt zur Herstellung von Kunststoffen verwendet.

Ein weiterer Aspekt der vorliegenden Erfindung ist die Verwendung der erfindungsgemäßen, nach Schritt (iii) erhaltenen Mischung zur Herstellung von Schmiermitteln. In einer Ausführungsform umfasst die Mischung zur Herstellung von Schmiermitteln gegebenenfalls Carbonsäureester, Dicarbonsäureester wie beispielsweise Phthalsäureester, und/oder Hydroxy-funktionalisierte Carbonsäureester.

Ein weiterer Aspekt der vorliegenden Erfindung ist die Verwendung der erfindungsgemäßen, nach Schritt (iii) erhaltenen Mischung zur Herstellung von Lösungsmitteln oder Basischemikalien. In einer Ausführungsform umfasst die Mischung zur Herstellung von Lösungsmitteln oder Basischemikalien gegebenenfalls ein Amin und/oder ein Polyamin wie beispielsweise Diaminotoluol. In einer anderen Ausführungsform umfasst die Mischung zur Herstellung von Lösungsmitteln oder Basischemikalien gegebenenfalls eine Dicarbonsäure oder einen Dicarbonsäureester wie beispielsweise Adipinsäure oder Adipinsäureester. In einer anderen Ausführungsform umfasst die Mischung zur Herstellung von Lösungsmitteln oder Basischemikalien gegebenenfalls ein Polyol wie beispielsweise Hexandiol oder Trimethylolpropan.

Weiterhin soll die vorliegende Erfindung durch die nachfolgenden Beispiele erläutert werden.

### Beispiel 1

Es wurden 4270 g Polyurethanweichschaum (high resilient (HR)-Schaum aus der Matratzenherstellung), basierend auf Polyetherpolyol und Toluoldiisocyanat, in 34300 g Methanol in einem Reaktor mit Rührwerk bereitgestellt. Nach Zugabe von 1420 g Natriummethanolatlösung (30% in Methanol, NM30 von Evonik) wurde der Reaktor verschlossen und mit Stickstoff inertisiert. Anschließend wurde die Mischung im Reaktor für 5 Stunden bei 158 °C und 15 bar gerührt.

Die resultierende klare Lösung wurde mittels GC (FID-Detektor, ZB-WAXplus Säule von Phenomex) bei einer Injektortemperatur von 250 °C, einer Aufheizrate von 60 °C/min und einem Temperaturprofil: 20 min 200 °C, 5 min 210 °C, 5 min 220 °C analysiert. Die detektierten Abbauprodukte waren 31,5 mg/ml 2,4-Toluoldiamin und 8,3 mg/ml 2,6-Toluoldiamin.

Mittels GPC Analyse (Eluent THF, Phenogel 5µm 100A Säule) konnte ein Etherpolyol (3500 g/mol) nachgewiesen werden. Der Kunststoffabbau verlief quantitativ, es konnte kein Polyurethanedukt in der Mischung nachgewiesen werden.

Die Auftrennung der aus dem Kunststoffabbau resultierenden Mischung erfolgte mittels Destillation bei Normaldruck zur quantitativen Abtrennung von Methanol und mittels Destillation im Vakuum zur Abtrennung von Diaminen.

### Beispiel 2

Es wurden 4270 g Polyurethanweichschaum (high resilient (HR)-Schaum aus der Matratzenherstellung), basierend auf Polyetherpolyol und Toluoldiisocyanat, in 34300 g Methanol in einem Reaktor mit Rührwerk bereitgestellt. Nach Zugabe von 1420 g Natriummethanolatlösung (30% in Methanol, NM30 von Evonik) wurde der Reaktor verschlossen und mit Stickstoff inertisiert. Anschließend wurde die Mischung im Reaktor für 5 Stunden bei 168 °C und 19 bar gerührt.

Die resultierende klare Lösung wurde mittels GC wie in Beispiel 1 beschrieben analysiert. Die detektierten Abbauprodukte waren 28,1 mg/ml 2,4-Toluoldiamin und 7,9 mg/ml 2,6-Toluoldiamin.

Mittels GPC Analyse (Eluent THF, Phenogel 5µm 100A Säule) konnte ein Etherpolyol (3500 g/mol) nachgewiesen werden. Der Kunststoffabbau verlief quantitativ, es konnte kein Polyurethanedukt in der Mischung nachgewiesen werden.

Die Auftrennung der aus dem Kunststoffabbau resultierenden Mischung erfolgte mittels Destillation bei Normaldruck zur quantitativen Abtrennung von Methanol und mittels Destillation im Vakuum zur Abtrennung von Diaminen.

### Beispiel 3 (Vergleichsbeispiel)

Es wurden 4270 g Polyurethanweichschaum (high resilient (HR)-Schaum aus der Matratzenherstellung), basierend auf Polyetherpolyol und Toluoldiisocyanat, in 34300 g Methanol in einem Reaktor mit Rührwerk bereitgestellt. Nach Zugabe von 1% Tetrabutyltitanat in Bezug auf den abzubauenden Weichschaum wurde der Reaktor verschlossen und mit Stickstoff inertisiert. Anschließend wurde die Mischung im Reaktor für 5 Stunden bei 158 °C und 15 bar gerührt.

Die resultierende trübe Lösung wurde mittels GC wie in Beispiel 1 beschrieben analysiert. Die detektierten Abbauprodukte waren 16,5 mg/ml 2,4-Toluoldiamin und 4,1 mg/ml 2,6-Toluoldiamin. Der Kunststoffabbau verlief unvollständig, es konnte ungelöstes Polyurethan in der Mischung nachgewiesen werden.

### Beispiel 4

Es wurden 4270 g Polyurethanweichschaum aus der Matratzenherstellung, basierend auf Polyesterpolyol und Toluoldiisocyanat, in 34300 g Methanol in einem Reaktor mit Rührwerk bereitgestellt. Nach Zugabe von 1420 g Natriummethanolatlösung (30% in Methanol, NM30 von Evonik) wurde der Reaktor verschlossen und mit Stickstoff inertisiert. Anschließend wurde die Mischung im Reaktor für 5 Stunden bei 158 °C und 15 bar gerührt.

Die resultierende bräunliche Lösung wurde mittels GC-MS analysiert. Die detektierten Abbauprodukte waren Methanol, 2,4-Toluoldiamin, 2,6-Toluoldiamin, Adipinsäuremethylester, Diethylenglykol, Trimethylolpropan und geringe Spuren an Carbamaten. Der Kunststoffabbau verlief quantitativ, es konnte kein Polyurethanedukt in der Mischung nachgewiesen werden.

Die Auftrennung der aus dem Kunststoffabbau resultierenden Mischung erfolgte mittels Destillation bei Normaldruck zur quantitativen Abtrennung von Methanol und mittels fraktionierter Destillation im Vakuum zur Abtrennung von Diethylenglykol, Adipinsäuremethylester und Toluoldiamin.

## Patentansprüche

1. Verfahren zum Abbau von Kunststoffen umfassend die Schritte:
(i) Bereitstellen von mindestens einem Kunststoff in mindestens einem Lösungsmittel in einem Reaktor;
(ii) Zugeben mindestens eines Katalysators ausgewählt aus Alkoholat;
(iii) Behandeln der in Schritt (ii) erhaltenen Mischung bei erhöhter Temperatur von 30-250 °C und/oder erhöhtem Druck von >1-100 bar; und
(iv) ggf. Auftrennen der in Schritt (iii) erhaltenen Mischung,
wobei der mindestens eine Kunststoff Polyurethan ist und
wobei das Lösungsmittel Methanol oder Ethanol ist.

2. Verfahren nach Anspruch 1, wobei der Kunststoff in Schritt (i) als Granulat, Pulver oder Schnittgut bereitgestellt wird.

3. Verfahren nach einem der vorhergehenden Ansprüche, wobei das Lösungsmittel Methanol ist.

4. Verfahren nach einem der vorhergehenden Ansprüche, wobei der Katalysator in Schritt (ii) ausgewählt ist aus Methanolat, stärker bevorzugt Alkalimethanolat, wie z.B. Kaliummethanolat oder Natriummethanolat.

5. Verfahren nach einem der vorhergehenden Ansprüche, wobei Schritt (iii) bei Temperaturen von 50-200°C, bevorzugt 80-180°C und bevorzugt bei Drücken von >1-30 bar, noch stärker bevorzugt >1-25 bar, durchgeführt wird.

6. Verfahren nach einem der vorhergehenden Ansprüche, wobei das Gewichtsverhältnis von Kunststoff zu Lösungsmittel in Schritt (i) 1:1 bis 1:40, bevorzugt 1:5 bis 1:20, stärker bevorzugt 1:5 bis 1:10 ist.

7. Verfahren nach einem der vorhergehenden Ansprüche, wobei das Gewichtsverhältnis von Kunststoff zu Katalysator zwischen 40:1 bis 5:1, bevorzugt zwischen 40:1 bis 10:1, stärker bevorzugt zwischen 30:1 bis 20:1 liegt.

8. Verfahren nach einem der vorhergehenden Ansprüche, wobei die Auftrennung in Schritt (iv) durch Destillation, Filtration, insbesondere Membranfiltration, Fällung und/oder Chromatographie erfolgt.

9. Mischung erhältlich nach einem Verfahren gemäß Anspruch 1 (i), (ii) und (iii).

10. Verwendung der Mischung nach Anspruch 9 zur Herstellung von Kunststoffen, insbesondere Polyurethanen, Schmiermitteln, insbesondere Ester-basierten Schmiermitteln, Basischemikalien oder Lösungsmitteln.

## Claims

1. Method for degradation of plastics comprising the steps:
(i) provision of at least one plastic in at least one solvent in a reactor;
(ii) addition of at least one catalyst, selected from alcoholate;
(iii) treatment of the mixture obtained in step (ii) at elevated temperatures of 30-250 °C and/or at elevated pressures from > 1 to 100 bar; and
(iv) optionally separation of the mixture obtained in step (iii),
wherein the at least one plastic is polyurethane, and
wherein the solvent is methanol or ethanol.

2. Method according to claim 1, wherein the plastic in step (i) is provided as granules, powder or chopped material.

3. Method according to any one of the preceding claims, wherein the solvent is methanol.

4. Method according to any one of the preceding claims, wherein the catalyst in step (ii) is selected from methanolate, more preferably alkali methanolate, e.g. potassium methanolate or sodium methanolate.

5. Method according to any one of the preceding claims, wherein step (iii) is carried out at temperatures of 50-200 °C, preferably 80-180 °C and preferably at pressures of >1-30 bar, more preferably >1-25 bar.

6. Method according to any one of the preceding claims, wherein the weight ratio of plastic to solvent in step (i) is 1:1 to 1:40, preferably 1:5 to 1:20, more preferably 1:5 to 1:10.

7. Method according to any one of the preceding claims, wherein the weight ratio of plastic to catalyst is between 40:1 to 5:1, preferably between 40:1 to 10:1, more preferably between 30:1 to 20:1.

8. Method according to any one of the preceding claims, wherein the separation in step (iv) is achieved through distillation, filtration, in particular membrane filtration, precipitation and/or chromatography.

9. Mixture obtainable using a method according to claim 1 (i), (ii) and (iii).

10. Use of the mixture according to claim 9 for the manufacture of plastics, in particular polyurethanes, lubricants, in particular ester-based lubricants, base chemicals or solvents.

## Revendications

1. Un procédé de dégradation de matières plastiques comprenant les étapes suivantes :
(i) prévoir au moins une matière plastique dans au moins un solvant dans un réacteur ;
(ii) ajouter au moins un catalyseur choisi parmi le alcoolate ;
(iii) traiter le mélange obtenu à l'étape (ii) à des températures élevées de 30 à 250 °C et/ou à des pressions élevées de > 1 à 100 bars ; et
(iv) éventuellement, séparer le mélange obtenu à l'étape (iii),
dans lequel ladite au moins une matière plastique est du polyuréthane, et dans lequel le solvant est du méthanol ou de l'éthanol.

2. Le procédé selon la revendication 1, dans lequel la matière plastique est prévue à l'étape (i) sous forme de granulés, de poudre ou de matériau coupé.

3. Le procédé selon l'une des revendications précédentes, dans lequel le solvant est du méthanol.

4. Le procédé selon l'une des revendications précédentes, dans lequel le catalyseur de l'étape (ii) est choisi parmi le méthanolate, de manière plus préférée le méthanolate alcalin, tels que le méthanolate de potassium ou le méthanolate de sodium.

5. Le procédé selon l'une des revendications précédentes, dans lequel l'étape (iii) est réalisée à des températures de 50 à 200 °C, de préférence de 80 à180 °C et de préférence à des pressions de >1 à 30 bar, de manière plus préférée >1 à 25 bar.

6. Le procédé selon l'une des revendications précédentes, dans lequel le rapport en poids de la matière plastique au solvant dans l'étape (i) est de 1 : 1 à 1 : 40, de préférence de 1 : 5 à 1 : 20, de manière plus préférée de 1 : 5 à 1 : 10.

7. Le procédé selon l'une des revendications précédentes, dans lequel le rapport en poids de la matière plastique au catalyseur est compris entre 40 : 1 et 5 : 1, de préférence entre 40 : 1 et 10 : 1, de manière plus préférée entre 30 : 1 et 20 : 1.

8. Le procédé selon l'une des revendications précédentes, dans lequel la séparation à l'étape (iv) est effectuée par distillation, filtration, en particulier filtration sur membrane, précipitation et/ou chromatographie.

9. Un mélange qui peut être obtenu par un procédé selon la revendication 1 (i), (ii) et (iii).

10. L'utilisation du mélange selon la revendication 9 pour la production de matières plastiques, en particulier de polyuréthanes, de lubrifiants, notamment de lubrifiants à base d'esters, de produits chimiques de base ou de solvants.
